(19) Europäisches Patentamt
European Patent Office
Office européen des brevets

(11) Veröffentlichungsnummer: **0 008 365**
**B1**

(12) # EUROPÄISCHE PATENTSCHRIFT

(45) Veröffentlichungstag der Patentschrift: **26.08.81**

(51) Int. Cl.³: **C 07 F 9/06,** C 07 F 9/09

(21) Anmeldenummer: **79102513.3**

(22) Anmeldetag: **18.07.79**

(54) **Salze der Diacylphosphorsäuren und ihre Herstellung.**

(30) Priorität: **20.07.78 DE 2831831**

(43) Veröffentlichungstag der Anmeldung: **05.03.80 Patentblatt 80/5**

(45) Bekanntmachung des Hinweises auf die Patenterteilung: **26.08.81 Patentblatt 81/34**

(84) Benannte Vertragsstaaten: **AT BE CH DE FR GB IT NL SE**

(56) Entgegenhaltungen:
**DE-B-1 199 251**

**Chemical Abstracts Band 74, Nr. 23, 7. Juni 1971, Columbus, Ohio, USA M.B. ABRAMSON et al. «Effect of hydrocarbon configuration and cholesterol on interactions of choline phospholipids with sulfatide». Seite 27, Spalte 1 bis 2, Abstract Nr. 120285w**

**Chemical Abstracts Band 74, Nr. 23, 7. Juni 1971, Columbus, Ohio, USA M.B. ABRAMSON «Thermal transitions of phospholipids in water: effect of chain length and polar groups of single lipids and mixtures» Seite 28, Spalte 1, Abstract Nr. 120292w**

**M. FIESER et al. «Reagents for Organic Synthesis» Band 2, WILEY-INTERSCIENCE, New York, London Sydney, Toronto**

(73) Patentinhaber: **BASF Aktiengesellschaft, Carl-Bosch-Strasse 38, D-6700 Ludwigshafen (DE)**

(72) Erfinder: **Perner, Johannes, Dr., Kiesstrasse 19 B, D-6730 Neustadt (DE)**
Erfinder: **Helfert, Herbert, Dr., Albrecht-Duerer-Ring 25, D-6710 Frankenthal (DE)**

**EP 0 008 365 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Salze der Diacylphosphorsäuren und ihre Herstellung

**Fassung A für die Vertragsstaaten BE, CH, DE, FR, GB, IT, NL, SE**

Die Erfindung betrifft Alkali-, Erdalkali- oder Ammoniumsalze acylierter Phosphorsäuren und ein Verfahren zu ihrer Herstellung durch Umsetzung von Phosphorsäure oder Dihydrogen-(primären)-phosphaten mit aliphatischen Carbonsäureanhydriden.

Die Umsetzung von Acylhalogeniden oder Keten mit Silber-Phosphaten ist bereits aus Kosolapoff, «Organic Phosphorus Compounds», Band 6, Seiten 294-296 und aus J. Amer. Chem. Soc. 70, 2183, bekannt. Abgesehen davon, dass nur monoacylierte Phosphorsäuren als Reaktionsprodukte detailliert beschrieben sind, und als Ausgangsstoffe sekundäre Silberphosphate genannt sind, führt dieses Verfahren zu schwierig abzutrennenden Nebenprodukten (AgCl oder Silberacetat). Eine mögliche Verwendung der acylierten Phosphate ist in der Literatur nicht angegeben.

Aus M. Fieser et al «Reagents for Organic Chemistry», Bd. 2, Seiten 12 und 13 (Wiley Intersc., New York, London, Sydney, Toronto) (1969) ist Monoacetylphosphat bekannt, das durch Reaktion von wasserfreier Phosphorsäure mit Acetanhydrid erhalten wird. Hinweise zur Herstellung von Diacetylphosphorsäure bzw. deren Salzen finden sich in dieser Literaturstelle jedoch nicht.

Es wurde nun überraschenderweise gefunden, dass Salze definierter diacylierter Phosphorsäuren, wie sie gemäss den Patentansprüchen 1 oder 2 beschrieben sind, wertvolle milde Acylierungsmittel darstellen.

Weiter wurde gefunden, dass man diese bisher nicht bekannten Verbindungen in einfacher Weise erhält, wenn man ein Dihydrogenphosphat oder Phosphorsäure nach Massgabe des Patentanspruchs 3 mit einem aliphatischen Carbonsäureanhydrid umsetzt.

Die Herstellung der erfindungsgemässen Verbindungen geht nach folgenden Reaktionsgleichungen vor sich (Definitionen entsprechen den Patentansprüchen):

A) 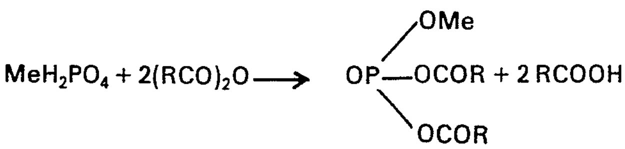

B) 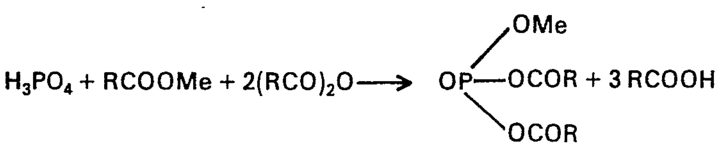

C) 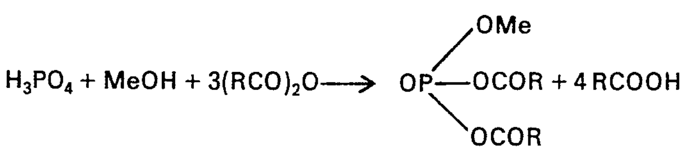

Ausgangsverbindungen sind somit Orthophosphorsäure oder Alkali-, Erdalkalimetall oder Ammoniumdihydrogenphosphat, von denen bevorzugt die Dihydrogenphosphate des Lithiums, Natriums, Kaliums, Magnesiums oder Calciums eingesetzt werden. Wenn man Orthophosphorsäure verwendet, so muss zur Bildung des Dihydrogenphosphations eine Base zugesetzt werden. Diese Base wird aus Ammoniak oder den Hydroxiden (Formel III) oder $C_1$- bis $C_3$-Carboxylaten (Formel IV) der oben genannten Metalle oder aus den entsprechenden Ammoniumcarboxylaten ausgewählt.

Weitere Ausgangsstoffe sind die Carbonsäureanhydride der Formel V und somit Essigsäure-, Propionsäure- oder Buttersäure-, vorzugsweise Essigsäure oder Propionsäureanhydrid.

**Fassung B für den Vertragsstaat: AT**

Die Erfindung betrifft ein Verfahren zur Herstellung von Alkali-, Erdalkali- oder Ammoniumsalzen acylierter Phosphorsäuren durch Umsetzung von Phosphorsäure oder Dihydrogen-(primären)-phosphaten mit aliphatischen Carbonsäureanhydriden.

Die Umsetzung von Acylhalogeniden oder Keten mit Silber-Phosphaten ist bereits aus Kosolapoff, «Organic Phosphorus Compunds», Band 6, Seiten 294-296 und aus J. Amer. Chem. Soc. 70, 2183, bekannt. Abgesehen davon, dass nur monoacylierte Phosphorsäuren als Reaktionsprodukte detailliert beschrieben sind, und als Ausgangsstoffe sekundäre Silberphosphate genannt sind, führt dieses Verfahren zu schwierig abzutrennenden Nebenprodukten (AgCl oder Silberacetat). Eine mögliche Verwendung der acylierten Phosphate ist in der Literatur nicht angegeben.

Aus M. Fieser et al «Reagents for Organic Synthesis», Bd. 2, Seiten 12 und 13 (Wiley Intersc., New York, London, Sydney, Toronto) (1969) ist Monoacetylphosphat bekannt, das durch Reaktion von wasserfreier Phosphorsäure mit Acetanhydrid erhalten wird. Hinweise zur Herstellung von Diacetylphosphorsäure bzw. deren Salzen finden sich in dieser Literaturstelle jedoch nicht.

Es wurde nun überraschenderweise gefunden, dass man Salze definierter diacylierter Phosphorsäuren gemäss dem Patentanspruch in einfacher Weise herstellen kann, wenn man ein Dihydrogenphosphat oder Phosphorsäure mit einem aliphatischen Carbonsäureanhydrid umsetzt. Die neuen Salze sind wertvolle milde Acylierungsmittel.

Die Herstellung der erfindungsgemässen Verbindungen geht nach folgenden Reaktionsgleichungen vor sich (Definitionen entsprechen den Patentansprüchen):

A) 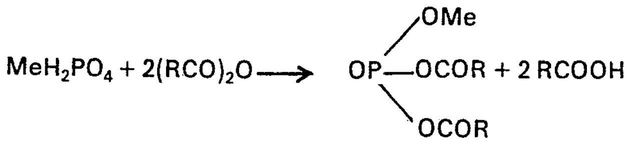

B) 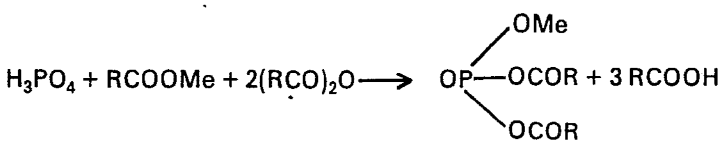

C) 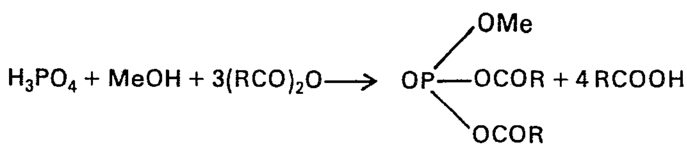

Ausgangsverbindungen sind somit Orthophosphorsäure oder Alkali-, Erdalkalimetall oder Ammoniumdihydrogenphosphat, von denen bevorzugt die Dihydrogenphosphate des Lithiums, Natriums, Kaliums, Magnesiums oder Calciums eingesetzt werden. Wenn man Orthophosphorsäure verwendet, so muss zur Bildung des Dihydrogenphosphations eine Base zugesetzt werden. Diese Base wird aus Ammoniak oder den Hydroxiden (Formel III) oder $C_1$- bis $C_3$-Carboxylaten (Formel IV) der oben genannten Metalle oder aus den entsprechenden Ammoniumcarboxylaten ausgewählt.

Weitere Ausgangsstoffe sind die Cabonsäureanhydride der Formel V und somit Essigsäure-, Propionsäure- oder Buttersäure-, vorzugsweise Essigsäure oder Propionsäureanhydrid.

Selbstverständlich können auch gemischte Anhydride (R = $R^1$ und/oder $R^2$) eingesetzt werden, ebenso wie auch die dem Carboxylat der Formel IV zugrundeliegende Carbonsäure nicht der dem Anhydrid zugrundeliegenden Carbonsäure entsprechen muss, jedoch ist es zweckmässig, um einheitliche Verbindungen zu erhalten, einheitliche Anhydride mit solchen Carboxylaten (falls ein solches verwendet wird) zu kombinieren, deren zugrundeliegenden Carbonsäuren miteinander identisch sind ($R^1=R^2=R$).

Entsprechend den Definitionen und den Reaktionsgleichungen sollen auf ein Mol Dihydrogenphosphat oder Orthophosphorsäure zusammen mit Carboxylat 2 Molteile Anhydrid kommen, d.h. es sollen stöchiometrische Verhältnisse eingehalten werden. Wählt man ein Hydroxid (Gleichung C) zusammen mit der Orthophosphorsäure, so benötigt man auf ein Mol dieser Ausgangsverbindung 3 Mol Anhydrid entsprechend der als Nebenprodukt erhaltenen zusätzlichen Molmenge Carbonsäure; auch hier werden somit molare Mengen umgesetzt. Man kann aber auch geringe Überschüsse an Anhydrid umsetzen, d.h. ein Mol Phosporsäure oder Dihydrogenphosphat mit bis zu 2,1 Mol Anhydrid (Gleichung A und B) bzw. bis zu 3,15 Mol Anhydrid (Gleichung C).

Überschüssiges Anhydrid kann nach der Reaktion leicht entfernt werden.

Die primären Phosphate (Dihydrogenphosphate) können wasserfrei oder kristallwasserhaltig zum Einsatz gelangen. Die Reaktion kann lösungsmittelfrei durchgeführt werden, doch empfiehlt es sich beim Arbeiten mit wasserfreien primären Phosphaten geringe Mengen an einer dem Anhydrid entsprechenden Säure bzw. das Anhydrid selbst als Lösungsmittel zu verwenden.

Die Reaktion wird bei Temperaturen zwischen 20 und 80°C, vorzugsweise 30 bis 60°C innerhalb von 1 bis 10 Stunden durchgeführt. Man kann die Reaktionspartner zusammen vorlegen und reagieren lassen; man kann aber auch einzelne Chargen nacheinander in das Reaktionsgefäss einbringen; dies gilt vor allem, wenn von Orthophosphorsäure ausgegangen wird. Im letzteren Fall ist es besonders zweckmässig, Phosphorsäure mit einem Teil des Anhydrids vorzulegen und die Base zusammen mit dem restlichen Anhydrid langsam unter mechanischer Bewegung des Ansatzes zuzugeben. Dies gilt vor allem, wenn Hydroxide als Basen verwendet werden. Man kann aber auch die Base allein einer Mischung aus dem Anhydrid und der Phosphorsäure zusetzen.

Wenn von Phosphorsäure ausgegangen wird, ist es generell zweckmässig, während der Zugabe der Base (mit oder ohne einem Teil der Anhydridmenge) zu kühlen, um die oben angegebenen Reaktionstemperaturen einzuhalten.

In allen Fällen empfiehlt es sich unter Feuchtigkeitsausschluss zu arbeiten, um die Hydrolyse der gebildeten gemischten Anhydride zu vermeiden. Zweckmässig ist z.B. Stickstoff als Inertgas.

Nach der Reaktion kann die als Nebenprodukt gebildete Carbonsäure destillativ (z.B. durch Rotationsverdampfer) leicht entfernt werden.

Die erhaltenen Produkte können durch Elementaranalyse, Glührückstand und organische Gruppenanalyse (Acylgehalt) identifiziert werden.

Sie stellen eine neue Gruppe von Acylierungsmitteln dar, mit denen im Gegensatz zu den recht aggressiven Säurechloriden und -anhydriden schonende Acylierungsreaktionen durchgeführt werden können.

Als leicht herzustellende und zu reinigende Substanzen stellen sie daher eine Bereicherung der Synthesetechnik auf diesem chemischen Gebiete dar.

Die nun folgenden Beispiele erläutern die Herstellung der erfindungsgemässen Produkte.

Teile sind Gewichtsteile, sofern sie nicht anders bezeichnet werden. Molteile zu Gewichtsteilen verhalten sich wie Mol zu Gramm.

Beispiel 1

Lithium-diacetylphosphat

In einem 1 l-Dreihalskolben mit Rührer, Kühler, Tropftrichter und Stickstoffeinleitrohr wird zu einer Lösung von 49 Teilen (0,5 Molteile) o-Phosphorsäure (100%ig) in 204 Teilen (2 Molteile) Essigsäureanhydrid unter Rühren und Stickstoffatmosphäre eine Lösung von 12 Teilen (0,5 Molteile) Lithiumhydroxid in 408 Teilen (4 Molteile) Essigsäureanhydrid zugetropft.

Es wird dann noch 2 Stunden bei 40 bis 50 °C nachgerührt und danach die hellgelbe, klare Reaktionsflüssigkeit am Rotationsverdampfer im Vakuum bei 65 °C eingeengt bis zur Trockene.

Man erhält ein weisses Festprodukt.

Ausbeute: 93 Teile (99% d.Th.)

| | C [in Gewichtsprozent] | H | P | Li | Glührückstand | Acetylgehalt |
|---|---|---|---|---|---|---|
| ber.: | 25,6 | 3,2 | 16,5 | 3,7 | 45,8 | 45,8 |
| gef.: | 25,4 | 3,0 | 16,2 | 3,7 | 46,0 | 44,5 |

Titer in $H_2O$ (nach 2 Stunden Hydrolyse): 15,87 mVal/g KOH; ber.: 15,96 mVal/g KOH

Beispiel 2

Lithium-dipropionylphosphat

12 Teile (0,5 Molteile) Lithiumhydroxid werden in 390 Teilen (3 Molteile) Propionsäureanhydrid vorgelegt.

Eine Lösung aus 49 Teilen (0,5 Molteile) o-Phosphorsäure (100%ig) in 390 Teilen (3 Molteile) Propionsäureanhydrid wird unter Rühren und Stickstoffatmosphäre bei ca. 40 °C zugetropft.

Danach wird noch 5 Stunden bei 40 °C nachgerührt. Die flüchtigen Anteile werden am Rotationsverdampfer bei 58 °C entfernt. Man erhält 106 Teile (98% d.Th.) Lithiumdipropionylphosphat als weisses Pulver.

| | C | H | P | Li | Glührückstand |
|---|---|---|---|---|---|
| ber.: | 33,4 | 4,7 | 14,3 | 3,2 | 39,8 |
| gef.: | 33,6 | 4,5 | 14,2 | 3,3 | 42,1 |

Titer in $H_2O$ (nach Hydrolyse): 13,4 mVal/g KOH; ber.: 13,89 mVal/g KOH

Beispiel 3

Natrium-diacetylphosphat

138 Teile (1 Molteil) Natriumhydrogenphosphat-monohydrat, 480 Teile (8 Molteile) Eisessig und 816 Teile (8 Molteile) Acetanhydrid werden bei 45 bis 60 °C 5 Stunden unter Stickstoffatmosphäre gerührt, dabei bildet sich eine klare, hellgelbe Lösung.

Die flüchtigen Anteile werden bei 58 °C am Rotationsverdampfer im Ölpumpenvakuum abgezogen. Man erhält das Natriumdiacetylphosphat als weisses Festprodukt in 99%iger Ausbeute.

| | C | H | P | Na | Glührückstand | Acetylzahl |
|---|---|---|---|---|---|---|
| ber.: | 23,6 | 2,96 | 15,2 | 11,3 | 50,0 | 42,2 |
| gef.: | 23,5 | 3,1 | 15,3 | 11,1 | 47,5 | 41,5 |

Wird Natriumdihydrogenphosphat wasserfrei (120 Teile) umgesetzt, so erhält man in 100%iger Ausbeute ebenfalls das Natriumdiacetylphosphat.

Beispiel 4

Natriumdiacetylphosphat

Zu einer Lösung von 816 Teilen (8 Molteile) Acetanhydrid und 196 Teilen (2 Molteile) o-Phosphorsäure (98%ig krist.) wird unter Rühren und Kühlen unter Stickstoffatmosphäre 80 Teile (2 Molteile) Natronlauge (100%ig) in 4 Portionen zugegeben. Danach wird noch 4 Stunden bei 35 bis 45°C nachgerührt. Wir erhalten 1089 Teile einer klaren, gelben Lösung.

100 Teile Lösung werden bei 58°C in 2 Stunden am Rotationsverdampfer getrocknet.

Man erhält ein weises Festprodukt.

Ausbeute: 35 Teile ≙ 94% d.Th.

| | C | H | P | Na | Glührückstand | Acetylzahl |
|---|---|---|---|---|---|---|
| ber.: | 23,6 | 2,96 | 15,2 | 11,3 | 50,0 | 42,2 |
| gef.: | 23,2 | 3,2 | 14,7 | 11,0 | 49,4 | 42,1 |

Beispiel 5

Natrium-diacetylphosphat

In einem 10 l-Dreihalskolben werden zu einer Lösung von 6375 Teilen (62,5 Molteile) Acetanhydrid und 2450 Teilen (25 Molteile) o-Phosphorsäure (100%ig) werden 2050 Teile (25 Molteile) Natriumacetat in 6 gleichen Portionen unter Kühlung zugegeben.

Die Reaktionstemperatur wird zwischen 31 und 41°C gehalten. Dann wird über Nacht bei Raumtemperatur gerührt.

Von der gelben Reaktionslösung werden 100 Teile bei 58°C am Ölpumpenvakuum getrocknet.

Man erhält ein weisses Festprodukt.

Ausbeute: 47 Teile ≙ 100% d.Th.

| | C | H | P | Na | Glührückstand | Acetylzahl |
|---|---|---|---|---|---|---|
| ber.: | 23,6 | 2,96 | 15,2 | 11,3 | 50,0 | 42,2 |
| gef.: | 22,6 | 3,1 | 15,0 | 11,3 | 49,7 | 39,9 |

Titer in $H_2O$: 14,2 mVal/g KOH
ber.: 14,71 mVal/g KOH

Beispiel 6

Kalium-diacetylphosphat

68 Teile (0,5 Molteile) Kaliumdihydrogenphosphat werden in 240 Teilen (4 Molteile) Eisessig und 408 Teilen (4 Molteile) Acetanhydrid über Nacht bei 40°C gerührt. Dabei entsteht eine klare Reaktionslösung. Die flüchtigen Anteile werden am Rotationsverdampfer im Vakuum bei 65°C entfernt. Es verbleibt ein weisses Festprodukt.

Ausbeute: 99 Teile ≙ 90% d.Th.

| | C | H | P | K | Glührückstand | Acetylzahl |
|---|---|---|---|---|---|---|
| ber.: | 21,8 | 2,7 | 14,1 | 17,8 | 53,6 | 39,1 |
| gef.: | 17,9 | 2,6 | 15,4 | 21,8 | 60,6 | 32,1 |

Titer in $H_2O$: 12,04 mVal/g KOH
ber.: 13,64 mVal/g KOH

Aus der Analyse folgt, dass das Produkt durch Kaliummonoacetylphosphat verunreinigt ist.

Beispiel 7

Magnesium-bis(diacetylphosphat)

14,5 Teile (0,25 Molteile) Magnesiumhydroxid werden in 408 Teilen (4 Molteile) Acetanhydrid vorgelegt und eine Lösung von 49 Teilen (0,5 Molteile) Phosphorsäure (100%ig) in 204 Teilen (2 Molteile) Acetanhydrid zugetropft.

Es wird noch 5 Stunden bei Raumtemperatur gerührt. Die klare Reaktionslösung wird am Rotationsverdampfer zur Trockene gebracht. Es verbleibt ein weisses Pulver.

Ausbeute: 92 Teile = 95% d.Th.

| | C | H | P | Mg | Glührückstand | Acetylzahl |
|---|---|---|---|---|---|---|
| ber.: | 24,9 | 3,1 | 16,1 | 6,3 | 47,2 | 44,6 |
| gef.: | 25,5 | 3,0 | 15,9 | 6,6 | 46,3 | 44,5 |

Titer in $H_2O$: 15,51 mVal/g KOH
ber.: 15,55 mVal/g KOH

Beispiel 8

Magnesium-bis(diacetylphosphat)

In einem 4 l-Dreihalskolben werden zu einer Lösung aus 1224 Teilen (12 Molteile) Essigsäureanhydrid und 400 Teilen (4 Molteile) o-Phosphorsäure (98%ig) in 4 gleichen Portionen 284 Teile (2 Molteile) Magnesiumdiacetat zugegeben und gerührt. Nachdem sich das Magnesiumdiacetat klar gelöst hat, wird noch 2 Stunden bei 41 bis 43°C nachgerührt.

Eine Probe von 200 Teilen der klaren Reaktionslösung wird am Rotationsverdampfer zur Trockene eingedampft. Man erhält das Magnesiumdiacetylphosphat als weisses Pulver.

Ausbeute: 81 Teile (100% d.Th.)
Titer in $H_2O$: 15,64 mVal/g KOH
ber.: 15,55 mVal/g KOH

Beispiel 9
Calcium-bis(dicetylphosphat)

17,5 Teile (0,25 Molteile) Calciumhydroxid werden in 408 Teilen (4 Molteile) Acetanhydrid bei 40 bis 50 °C unter Rühren und Stickstoffatmosphäre gelöst.

Zu dieser Lösung wird eine Lösung von 49 Teilen (0,5 Molteile) Phosphorsäure (100%ig) in 306 Teilen (3 Molteile) Acetanhydrid bei 46 bis 50 °C zugetropft. Es entsteht eine klare Reaktionslösung.

Es wird 6 Stunden bei 46 °C unter Feuchtigkeitsausschluss gerührt und die Lösung danach am Rotationsverdampfer bei 58 °C im Ölpumpenvakuum zur Trockene gebracht.

Das Calcium-diacetylphosphat fällt als weisses festes Produkt an.

Ausbeute: 94 Teile ≙ 94% d.Th.

| | C | H | P | Ca | Glührückstand | Acetylzahl (%) |
|---|---|---|---|---|---|---|
| ber.: | 23,9 | 3,00 | 15,4 | 10,0 | 49,2 | 42,8 |
| gef.: | 23,6 | 3,2 | 15,7 | 10,2 | 48,9 | 39,9 |

Titer in $H_2O$: 15,12 mVal/g KOH (nach Hydrolyse)
ber.: 14,93 mVal/g KOH

Beispiel 10
Ammonium-diacetylphosphat

98 Teile (1 Molteil) Phosphorsäure (100%ig) werden in 306 Teilen (3 Molteile) Acetanhydrid gelöst.

Zu dieser Lösung werden 77 Teile (1 Molteil) Ammoniumacetat zugegeben und gerührt, bis alles gelöst ist. Es wird noch 6 Stunden bei 40 bis 50 °C nachgerührt.

Die flüchtigen Anteile werden am Rotationsverdampfer abgezogen. Es verbleibt ein weisses Festprodukt.

Ausbeute: 187 Teile ≙ 94% d.Th.

| | C | H | N | P |
|---|---|---|---|---|
| ber.: | 24,13 | 5,06 | 7,03 | 15,5 |
| gef.: | 24,3 | 5,0 | 7,2 | 15,7 |

**Patentansprüche für die Vertragsstaaten BE, CH, DE, FR, GB, IT, NL, SE**

1. Verbindungen der Formel I

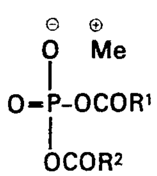

I,

in der $R^1$ und $R^2$ gleich oder verschieden sind und $C_1$- bis $C_3$-Alkylreste bedeuten und Me für ein Alkalimetall, Ammonium oder für die äquivalente Menge eines Erdalkalimetalls steht.

2. Verbindungen der Formel I gemäss Anspruch 1, in der $R^1$ und $R^2$ gleich sind und für die Methyl- oder Äthylgruppe stehen.

3. Verfahren zur Herstellung von Verbindungen der Formel I gemäss Anspruch 1, dadurch gekennzeichnet, dass man ein Molteil eines Dihydrogenphosphats der Formel II

$$Me^{\oplus} H_2PO_4^{\ominus} \quad II,$$

oder eine Mischung aus einem Molteil Orthophosphorsäure mit der zur Bildung des Dihydrogenphosphats erforderlichen Menge einer Base der Formeln III oder IV

MeOH III oder
MeOOCR IV

mit 2 bis 2,1 oder im Falle, dass eine Base der Formel III verwendet wird, 3 bis 3,15 Molteilen eines Carbonsäureanhydrids der Formel V

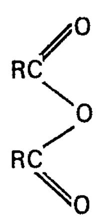

V

umsetzt, wobei Me gemäss Formel I definiert ist, und R für $R^1$ und/oder $R^2$ gemäss Formel I steht.

**Patentanspruch für den Vertragsstaat: AT**

Verfahren zur Herstellung von Verbindungen der Formel I

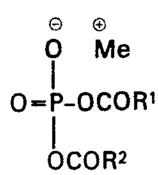

I,

in der R1 und $R^2$ gleich oder verschieden, vorzugsweise gleich, sind und $C_1$- bis $C_3$-Alkylreste, vorzugsweise die Methyl- oder Ethylgruppe, bedeuten und Me für ein Alkalimetall, Ammonium oder für die äquivalente Menge eines Erdalkalimetalls steht, dadurch gekennzeichnet, dass man ein Molteil eines Dihydrogenphosphats der Formel II

$Me^{\oplus}H_2PO_4^{\ominus}$ II,

oder eine Mischung aus einem Molteil Orthophosphorsäure mit der zur Bildung des Dihydrogenphosphats erforderlichen Menge einer Base der Formeln III oder IV

MeOH III oder
MeOOCR IV

mit 2 bis 2,1 oder im Falle, dass eine Base der Formel III verwendet wird, 3 bis 3,15 Molteilen eines Carbonsäureanhydrids der Formel V

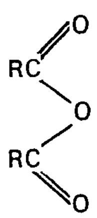

V

umsetzt, wobei Me gemäss Formel I definiert ist, und R für $R^1$ und/oder $R^2$ gemäss Formel I steht.

**Revendications pour les Etats contractants: BE, CH, DE, FR, GB, IT, NL, SE**

1. Composés de la formule générale I

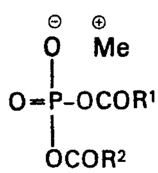

(I),

dans laquelle $R^1$ et $R^2$, qui peuvent être identiques ou différents, désignent des radicaux alcoyle en $C_1$ à $C_3$ et Me représente un métal alcalin, de l'ammonium ou une quantité équivalente d'un métal alcalino-terreux.

2. Composés de la formule I suivant la revendication 1, dans laquelle $R^1$ et $R^2$ sont identiques et représentent chacun un radical méthyle ou un radical éthyle.

3. Procédé de préparation de composés de la formule I suivant la revendication 1, caractérisé en ce que l'on fait réagir 1 mole d'un dihydrogénophosphate de la formule II

$Me^{\oplus}H_2PO_4^{\ominus}$ (II)

ou un mélange de 1 mole d'acide orthophosphorique et de la proportion nécessaire pour la formation du dihydrogénophosphate d'une base de l'une des formules

MeOH (III)
ou MeOOCR (IV)

avec 2 à 2,1 moles ou, dans le cas de l'utilisation d'une base de la formule III, avec 3 à 3,15 moles d'un anhydride d'acide carboxylique de la formule V

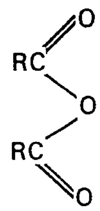

(V),

formules dans lesquelles Me possède les significations définies pour la formule I et R désigne $R^1$ et(ou) $R^2$ tels que définis pour la formule I.

**Revendication pour l'Etat contractant: AT**

Procédé de préparation de composés de la formule générale I

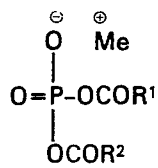

(I),

dans laquelle $R^1$ et $R^2$, qui peuvent être identiques ou différents, mais de préférence identiques, représentent chacun un radical alcoyle en $C_1$ à $C_3$, de préférence un radical méthyle ou éthyle, et Me représente un métal alcalin, de l'ammonium ou une quantité équivalente d'un métal alcalino-terreux, caractérisé en ce que l'on fait réagir 1 mole d'un dihydrogénophosphate de la formule II

$Me^{\oplus}H_2PO_4^{\ominus}$ (II)

ou un mélange de 1 mole d'acide orthophosphorique et de la quantité nécessaire pour la formation du dihydrogénophosphate d'une base de l'une des formules

MeOH (III)
ou MeOOCR (IV)

avec 2 à 2,1 moles ou, dans le cas de l'utilisation d'une base de la formule III, avec 3 à 3,15 moles d'un anhydride d'acide carboxylique de la formule V

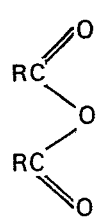

(V),

formules dans lesquelles Me possède les significations définies pour la formule I et R représente $R^1$ et(ou) $R^2$ tels que définis pour la formule I.

**Claims for the Contracting states: BE, CH, DE, FR, GB, IT, NL, SE**

1. Compounds of the formula I

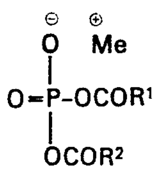

I,

where $R^1$ und $R^2$ are identical or different and denote $C_1$- to $C_3$-alkyls, and Me stands for an alkali metal, ammonium or the equivalent amount of an alkaline earth metal.

2. Compounds of the formula I as claimed in claim 1, where $R^1$ and $R^2$ are identical and stand for methyls or ethyls.

3. A process for the production of compounds of the formula I as claimed in claim 1, characterized in that one molar part of a dihydrogen phosphate of the formula II

$Me^{\oplus} H_2PO_4^{\ominus}$ II,

or a mixture of one molar part of orthophosphoric acid with the necessary amount of a base of the formula III or IV to form the dihydrogen phosphate

MeOH III or
MeOOCR IV

is reacted with 2 to 2.1 or, if a base of the formula III is used, 3 to 3.15 molar parts of a carboxylic acid anhydride of the formula V

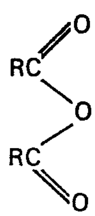

V

Me being defined as for formula I, and R standing for $R^1$ and/or $R^2$ as defined for formula I.

**Claim for the Contracting state: AT**

A process for the production of compounds of the formula I

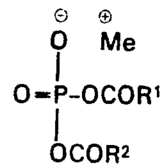

I,

where $R^1$ and $R^2$ are identical or different and denote $C_1$- to $C_3$-alkyls, preferably methyl or ethyl, and Me stands for an alkali metal, ammonium or the equivalent amount of an alkaline earth metal, characterized in that one molar part of a dihydrogen phosphate of the formula II

$Me^{\oplus} H_2PO_4^{\ominus}$ II,

or a mixture of one molar part of orthophosphoric acid with the necessary amount of a base of the formula III or IV to form the dihydrogen phosphate

MeOH III or
MeOOCR IV

is reacted with 2 to 2.1 or, if a base of the formula III is used, 3 to 3.15 molar parts of a carboxylic acid anhydride of the formula V

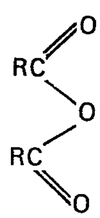

V

Me being defined as for formula I, and R standing for $R^1$ and/or $R^2$ as defined for formula I.